# EUROPÄISCHE PATENTSCHRIFT

(11) **EP 2 754 880 B1**
(45) Veröffentlichungstag und Bekanntmachung des Hinweises auf die Patenterteilung: **14.03.2018**
(21) Anmeldenummer: 14150804.4
(22) Anmeldetag: 10.01.2014
(51) Int. Cl.: F02M 35/024, F02M 35/02, B01D 46/24

(54) **Filtereinrichtung**
Filter device
Dispositif de filtre

(30) Priorität: 15.01.2013 DE 102013200511
(43) Veröffentlichungstag der Anmeldung: 16.07.2014
(73) Patentinhaber: MAHLE International GmbH, 70376 Stuttgart (DE)
(72) Erfinder: Kollmann, Andreas, 9421 Eitweg (AT); Zausnig, Peter, 9173 St. Margareten (AT)
(74) Vertreter: BRP Renaud & Partner mbB Rechtsanwälte Patentanwälte Steuerberater

(56) Entgegenhaltungen:
- WO-A1-2010/070102
- WO-A2-2004/033067
- DE-A1-102010 034 787
- DE-U1-202006 005 012
- US-A1- 2010 000 414

## Beschreibung

Die vorliegende Erfindung betrifft eine Filtereinrichtung, insbesondere zur Filtration der Ansaugluft einer Brennkraftmaschine, gemäß dem Oberbegriff des Anspruchs 1. Die Erfindung betrifft außerdem ein für eine derartige Filtereinrichtung passendes Filterelement.

Gattungsgemäße Filtereinrichtungen sind hinlänglich bekannt, wobei ein Filterelement in der Filtereinrichtung beispielsweise mittels einer Spannschraube befestigt oder mittels eines Deckels des Filtergehäuses fixiert bzw. vorgespannt wird. Aufgrund von äußerst beengten Platzverhältnissen in modernen Motorräumen bzw. allgemein in Kraftfahrzeugen ist es unter Umständen erforderlich, das üblicherweise zylinderförmige Filterelement quer zu seiner Zylinderachse ein- bzw. auszubauen, so dass der Deckel in diesem Fall einen Teil der Mantelfläche des Filtergehäuses darstellt. Ein Problem bei einem derartigen Gehäuseaufbau besteht nun darin, dass eine Axialverschiebung des Filterelements zum Abdichten zwischen einer Rohseite und einer Reinseite erforderlich ist, was wiederum ist bei einem Quereinbau jedoch nur mit vergleichsweise aufwändigen Konstruktionen zu bewerkstelligen ist.

Aus der EP 1 286 750 B1 ist eine gattungsgemäße Filtereinrichtung zur Filtration der Ansaugluft einer Brennkraftmaschine bekannt, welche ein Filtergehäuse mit einem darin austauschbar angeordneten Filterelement aufweist. Das Filterelement trennt dabei eine Reinseite von einer Rohseite und ist im Wesentlichen zylinderförmig ausgebildet. An einer der beiden Endscheiben des Filterelements ist dabei eine Axialdichtung angeordnet, die in Verbindung mit einer Dichtfläche des Filtergehäuses die Abdichtung zwischen der Rohseite und der Reinseite bewirkt. Im Filtergehäuse selbst ist eine filtergehäusefeste Abstützung vorgesehen, an der sich das Filterelement derart abstützen kann, dass dieses mit seiner Axialdichtung zuverlässig an der Dichtfläche des Filtergehäuses anliegt. Zum Verspannen des Filterelements mit seiner Axialdichtung gegen die Dichtfläche des Filtergehäuses ist ein Spannkeil vorgesehen, der eine Kraft auf das Filterelement ausübt und zwar derart, dass die Axialdichtung zuverlässig an der Dichtfläche des Filtergehäuses anliegt. Ein derartiger Spannkeil stellt jedoch ein zusätzliches Element dar, welches nicht nur separat und dadurch kostenintensiv gefertigt werden muss, sondern zudem auch weitere Lager- und Logistikkosten nach sich zieht.

Aus der DE 10 2010 034 787 A1 ist eine Filtereinrichtung mit einem Filtergehäuse mit einem darin austauschbar angeordneten Filterelement bekannt, welches eine Reinseite von der Rohseite trennt und im Wesentliche zylinderförmig gestaltet ist. An einer Endscheibe des Filterelements ist dabei eine Axialdichtung angeordnet, die in Verbindung mit einer Dichtfläche des Filtergehäuses die Abdichtung zwischen Rohseite und Reinseite bewirkt. Ebenfalls vorgesehen ist eine Filtergehäuse feste Abstützung, an der sich das Filterelement derart abstützt, dass diese mit seiner Axialdichtung zuverlässig an der Dichtfläche des Filtergehäuses anliegt.

Aus der DE 20 2006 005 012 U1 ist eine weitere Filtereinrichtung mit einem Filtergehäuse mit einem darin austauschbar angeordneten Filterelement bekannt.

Die vorliegende Erfindung beschäftigt sich daher mit dem Problem, für eine Filtereinrichtung der gattungsgemäßen Art eine verbesserte oder zumindest eine alternative Ausführungsform anzugeben, die sich insbesondere durch eine vergleichsweise einfache Montage eines Filterelements und zudem durch eine zuverlässige Abdichtung bzw. Trennung zwischen einer Rohseite und einer Reinseite in der Filtereinrichtung auszeichnet.

Dieses Problem wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, einen bisher separat hergestellten und auch separat zu montierenden Spannkeil nunmehr durch eine bereits an einer Endscheibe eines Filterelements angeordnete Federeinrichtung zu ersetzen, wodurch sich der Einbau des Filterelements in die Filtereinrichtung deutlich einfacher gestalten lässt und zudem separate Herstellungs-, Lager- und Logistikkosten für den Spannkeil entfallen. Die erfindungsgemäße Filtereinrichtung weist dabei ein Filtergehäuse mit einem darin austauschbar angeordneten Filterelement auf, wobei dieses zylinderförmig ausgebildet ist und eine Reinseite von einer Rohseite, beispielsweise eine Reinluftseite von einer Rohluftseite, trennt. An einer der Endscheiben des Filterelements ist dabei eine Axialdichtung angeordnet, die in Verbindung mit einer Dichtfläche des Filtergehäuses die Abdichtung zwischen der genannten Rohseite und Reinseite bewirkt. Die Axialdichtung ist durch einen elastischen Werkstoff, insbesondere einen elastischen Kunststoff gebildet. Vorzugsweise ist die Axialdichtung durch ein thermoplastisches Elastomer oder einen Polyurethanschaum gebildet. Alternativ kann die Axialdichtung auch durch EPDM, NBR oder durch eine flexible Kunststofflippe, welche insbesondere aus dem gleichen Material wie die Endscheibe besteht, gebildet werden. Im Filtergehäuse selbst ist eine filtergehäusefeste Abstützung angeordnet, an der sich das Filterelement derart abstützen kann, dass dieses mit seiner Axialdichtung zuverlässig an der Dichtfläche des Filtergehäuses anliegt. Erfindungsgemäß ist nun an zumindest einer Endscheibe, vorzugsweise sogar an beiden Endscheiben, des Filterelements eine Federeinrichtung angeordnet, die sich beim Einsetzen des Filterelements in das Filtergehäuse an der besagten filtergehäuseseitigen Abstützung federnd abstützt und dadurch das Filterelement mit seiner Axialdichtung gegen die Dichtfläche des Filtergehäuses vorspannt. Der wesentliche Vorteil der erfindungsgemäßen Filtereinrichtung besteht nun darin, dass der bisher erforderliche separate Spannkeil entfallen kann, da dieser in veränderter Form nunmehr einteilig und insbesondere einstückig an der Endscheibe des Filterelements angeordnet ist und dadurch zusammen mit dieser in einem einzigen Arbeitsschritt hergestellt werden kann. Eine separate Montage der Federeinrichtung ist dabei ebenso entbehrlich wie eine separate Herstellung und verbunden damit die mit der separaten Herstellung einhergehenden Lager- und Logistikkosten. Durch die direkte Anbindung der erfindungsgemäßen Federeinrichtung an die Endscheibe kann insbesondere auch ein Falscheinbau durch einen Werker zuverlässig vermieden werden, wodurch die Qualität bei der Herstellung der Filtereinrichtung gesteigert werden kann. Zusätzlich weist die Federeinrichtung zwei sich gegenüberliegende und im Wesentlichen tangential zur Endscheibe verlaufende Federbügel auf, die jeweils über einen ersten und einen zweiten Steg mit der Endscheibe verbunden sind. Ein Abstand zwischen den beiden jeweils ersten Stegen der Federbügel ist dabei geringer als ein Abstand zwischen den beiden zweiten Stegen, so dass das Filterelement mit den ersten Stegen voraus an der filtergehäusefesten Abstützung vorbei geschoben werden kann und erst danach die Federbügel auf der filtergehäuseseitigen Abstützung aufliegen. In einer Draufsicht gesehen würden zwei durch die jeweils ersten und zweiten Stege verlaufenden Linien somit konisch aufeinander zu verlaufen. Durch die erfindungsgemäße Anordnung bzw. Auswahl der Abstände zwischen jeweils ersten und zweiten Stegen kann darüber hinaus ein Falscheinbau durch einen Werker, insbesondere in der Art eines Poka-Yoke-Systems verhindert werden. Die Anordnung der filtergehäusefesten Abstützung, beispielsweise mehrere radial nach innen von einer Filtergehäusewand abstehenden Konsolen sowie die Ausbildung der Federbügel kann darüber hinaus derart gewählt werden, dass sich hieraus ein Schlüssel-Schloss-Prinzip ergibt, welches den Einbau nicht autorisierter Filterelemente unterbindet und dadurch eine hohe Qualität hinsichtlich der Filterleistung sicherstellt. Zweckmäßig ist die Federeinrichtung einstückig mit der Endscheibe ausgebildet. Eine derartige einstückige Ausbildung der Federeinrichtung mit der Endscheibe bietet den großen Vorteil, dass diese zusammen mit der Endscheibe, beispielsweise in einem Kunststoffspritzgusswerkzeug, hergestellt werden kann, was bezüglich der Herstellung einen lediglich marginalen Mehraufwand durch eine einmalige Anpassung des Spritzgusswerkzeugs bedeutet. Durch die einstückige Ausbildung der Federeinrichtung mit der Endscheibe lassen sich aber insbesondere die bisher erforderlichen Montagekosten sowie die bisher ebenfalls erforderlichen Lager- und Logistikkosten für separate Spannkeile einsparen. Die Federeinrichtung ist dabei vorzugsweise aus dem gleichen Kunststoff gefertigt wie die Endscheibe, beispielsweise aus einem Thermoplast, wobei die Federwirkung der Federeinrichtung lediglich über die Lebensdauer des Filterelements, also lediglich über einen vordefinierten Wartungsintervall gegeben sein muss.

Zweckmäßig ist an zumindest einem zweiten Steg ein Anschlag angeordnet. Ein derartiger Anschlag begrenzt eine Einschiebebewegung des Filterelements in das Filtergehäuse und stellt somit eine haptische Kontrolle für den richtigen Einbau des Filterelements im Filtergehäuse für den Werker dar.

Die Erfindung beruht weiter auf dem allgemeinen Gedanken, ein Filterelement für eine derartige Filtereinrichtung mit einer zuvor beschriebenen Federeinrichtung an zumindest einer Endscheibe auszustatten, so dass auch derartige Filterelemente von der Erfindung umfasst und geschützt sein sollen. Das erfindungsgemäße Filterelement weist somit an zumindest einer Endscheibe eine derartige Federeinrichtung auf, die sich beim Einsetzen des Filterelements in das Filtergehäuse an der filtergehäusefesten bzw. filtergehäuseseitigen Abstützung federnd abstützt und dadurch das Filterelement mit seiner Axialdichtung gegen die Dichtfläche im Filtergehäuse vorspannt. Der Aufbau der Federeinrichtung, insbesondere im Hinblick auf die jeweils ersten und zweiten Stege bzw. die Federbügel entspricht dabei der in den vorherigen Absätzen beschriebenen.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: eine erfindungsgemäße Filtereinrichtung, insbesondere zur Filtration von Ansaugluft einer Brennkraftmaschine,
- Fig. 2: ein erfindungsgemäßes Filterelement mit einer Federeinrichtung in einer ersten Ansicht,
- Fig. 3 und 4: weitere Ansichten auf Ausführungsformen des erfindungsgemäßen Filterelements.

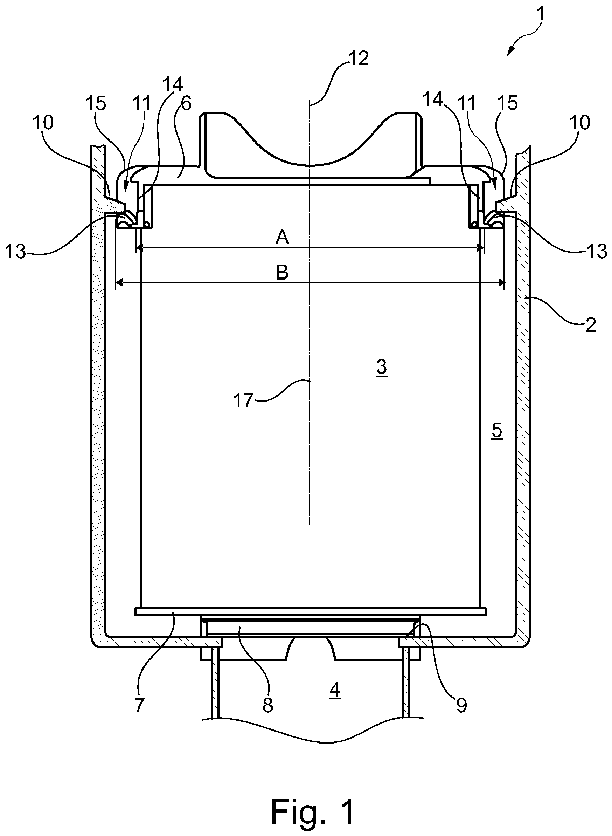

Entsprechend der Figur 1 weist eine erfindungsgemäße Filtereinrichtung 1, die insbesondere zur Filtration von Ansaugluft in einer nicht näher bezeichneten Brennkraftmaschine ausgebildet ist, ein Filtergehäuse 2 auf, in welchem austauschbar ein Filterelement 3, insbesondere ein Ringfilterelement, angeordnet ist. Das Filterelement 3 trennt dabei in bekannter Weise eine Reinseite 4 von einer Rohseite 5 und ist im Wesentlichen zylinderförmig ausgebildet, das heißt radial von außen nach innen durchströmt. Stirnseitig wird das Filterelement 3 von zwei Endscheiben 6 und 7 begrenzt, wobei im vorliegenden Fall an der Endscheibe 7 eine Axialdichtung 8 angeordnet ist, die in Verbindung mit einer Dichtfläche 9 des Filtergehäuses 2 die Abdichtung zwischen Rohseite 5 und Reinseite 4 bewirkt. Ebenfalls vorgesehen ist eine filtergehäusefeste und filtergehäuseseitig angeordnete Abstützung 10, an welcher sich das Filterelement 3 derart abstützt, dass dieses mit seiner Axialdichtung 8 zuverlässig an der Dichtfläche 9 des Filtergehäuses 2 anliegt. Erfindungsgemäß ist nun an zumindest einer Endscheibe 6, 7, hier an der Endscheibe 6, des Filterelements 3 eine Federeinrichtung 11 angeordnet, die sich beim Einsetzen des Filterelements 3 in das Filtergehäuse 2 an der filtergehäusefesten Abstützung 10 federnd abstützt und dadurch das Filterelement 3 mit seiner Axialdichtung 8 gegen die Dichtfläche 9 des Filtergehäuses 2 vorspannt. Ein Einbau des Filterelements 3 in das Filtergehäuse 2 erfolgt dabei orthogonal zu einer Filterelementachse 12. Die Federeinrichtung 11 setzt dabei für diesen Zweck bisher erforderliche Spannkeile, die nicht nur separat gefertigt, sondern auch zusätzlich montiert werden mussten, was zu einem nicht zu unterschätzenden Kostennachteil führte. Die Federeinrichtung 11 ist dabei vorzugsweise einstückig mit der Endscheibe 6 ausgebildet und kann somit zusammen mit dieser in einem einfachen Stoffspritzgussprozess hergestellt werden. In der Figur 1 ist die Federeinrichtung 11 an der oberen Endscheibe 6 angeordnet, wogegen die Axialdichtung 8 an der unteren Endscheibe 7 angeordnet ist. Klar ist jedoch auch, dass eine derartige Federeinrichtung 11 alternativ auch an der unteren Endscheibe 7 angeordnet werden kann oder an beiden Endscheiben 6, 7, wobei in diesen Fällen die gehäusefeste Abstützung 10 entsprechend angepasst sein muss.

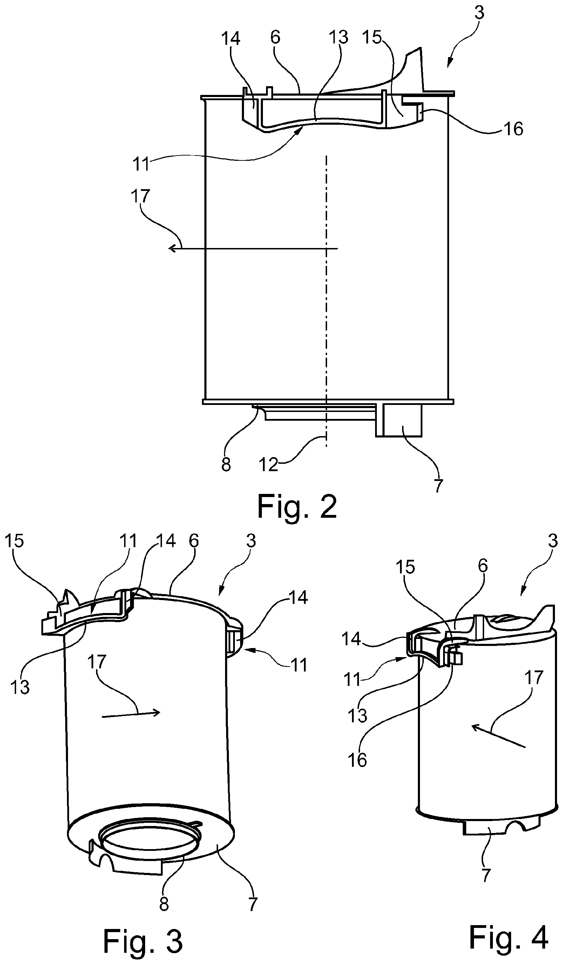

Entsprechend den Figuren 1 bis 4 ist ein erfindungsgemäßes Filterelement 3 gezeigt, dessen Endscheiben 6, 7 beispielsweise aus einem thermoplastischen Kunststoff um die Axialdichtung 8 aus einem Polyurethanschaum ausgebildet sind. Wie insbesondere auch den Figuren 2 bis 4 zu entnehmen ist, weist die Federeinrichtung 11 zwei sich gegenüberliegende und im Wesentlichen tangential zur Endscheibe 6 verlaufende Federbügel 13 auf. Die Federbügel 13 sind dabei jeweils über einen ersten Steg 14 und einen zweiten Steg 15 mit der Endscheibe 6 verbunden. Am zweiten Steg 15 ist darüber hinaus ein Anschlag 16 angeordnet, der eine Einschiebebewegung des Filterelements 3 in das Filtergehäuse 2 durch beispielsweise ein Anliegen an der filtergehäusefesten Abstützung 10 begrenzt und dadurch haptisch das Erreichen einer vordefinierten Einbauposition anzeigt. Die Einschieberichtung des Filterelements 3 in das Filtergehäuse 2 ist dabei in der Figur 2 mit einem Pfeil 17 bezeichnet. Der Federbügel 13 ist darüber hinaus in Richtung der Endscheibe 6 gewölbt, woraus seine federnde Wirkung beim Einschieben in das Filtergehäuse 2 resultiert. Beim Einschieben in das Filtergehäuse 2 wird der Federbügel 13 nämlich durch Anlage an die filtergehäuseseitige Abstützung 10 entsprechend nach unten verformt und dadurch in Richtung einer Geraden verbogen. Trotzdem verbleibt eine zumindest gewisse Krümmung des Federbügels 13 auch nach vollständigem Einschieben des Filterelements 3 in das Filtergehäuse 2 erhalten, wodurch die federnde Wirkung des Federbügels 13 und dadurch die federnde Vorspannung der Axialdichtung 8 gegen die Dichtfläche 9 erhalten bleibt.

Betrachtet man insbesondere nochmals die Figur 1, so kann man erkennen, dass die beiden in Einschieberichtung 17 (senkrecht aus der Bildebene heraus) ersten Stege 14 einen geringeren Abstand A zueinander aufweisen als die zweiten Stege 15, deren Abstand B in Radialrichtung größer ist. Aufgrund dieser Tatsache kann das Filterelement 3 mit den ersten Stegen 14 an der filtergehäusefesten Abstützung 10 vorbei geschoben werden und erst danach liegen die Federbügel 13 auf der filtergehäuseseitigen Abstützung 10 auf. Durch diesen Umstand kann ein Quereinbau des Filterelements 3 in das Filtergehäuse 2 orthogonal zur Filterelementachse 12 erfolgen.

Das Filterelement 3 kann als gewöhnliches Ringfilterelement mit einem zickzackförmig gefalteten Filtermaterial ausgebildet sein und zusätzlich zur Versteifung eine Innenzarge oder eine nicht gezeigte Außenzarge aufweisen.

Mit dem erfindungsgemäßen Filterelement 3 und auch der erfindungsgemäßen Filtereinrichtung 1 lässt sich ein Montageaufwand des Filterelements 3 im Filtergehäuse 2 der Filtereinrichtung 1 deutlich vereinfachen und damit kostengünstiger gestalten, da nunmehr die zur Vorspannung erforderliche Federeinrichtung 11 einteilig bzw. einstückig mit dem Filterelement 3, das heißt insbesondere mit einer Endscheibe 6, 7 des Filterelements 3 ausgebildet ist und nicht mehr wie bisher als separater Spannkeil, der nicht nur separat gefertigt, sondern auch aufwändig separat montiert werden musste. Die Herstellung der Federeinrichtung 11 ist dabei denkbar einfach, insbesondere durch eine entsprechende Umgestaltung eines Kunststoffspritzgusswerkzeuges, so dass für die erfindungsgemäße Federeinrichtung 11 lediglich marginale Mehrkosten entstehen. Durch den kleineren Abstand A zwischen den beiden in Einschieberichtung 17 ersten Stegen 14 im Vergleich zum Abstand B zwischen den beiden in Einschieberichtung 17 nachfolgenden zweiten Stegen 15 kann darüber hinaus ein Falscheinbau zuverlässig verhindert werden, wodurch eine Art Poka-Yoke-System geschaffen werden kann.

## Patentansprüche

1. Filtereinrichtung (1), insbesondere zur Filtration der Ansaugluft einer Brennkraftmaschine,
- mit einem Filtergehäuse (2) mit einem darin austauschbar angeordneten Filterelement (3), welches eine Reinseite (4) von einer Rohseite (5) trennt und welches im Wesentlichen zylinderförmig gestaltet ist,
- wobei an einer Endscheibe (7) des Filterelements (3) eine Axialdichtung (8) angeordnet ist, die in Verbindung mit einer Dichtfläche (9) des Filtergehäuses (2) die Abdichtung zwischen Rohseite (5) und Reinseite (4) bewirkt,
- mit einer filtergehäusefesten Abstützung (10), an der sich das Filterelement (3) derart abstützt, dass dieses mit seiner Axialdichtung (8) zuverlässig an der Dichtfläche (9) des Filtergehäuses (2) anliegt,
- wobei an zumindest einer Endscheibe (6,7) des Filterelements (3) eine Federeinrichtung (11) angeordnet ist, die sich beim Einsetzen des Filterelements (3) in das Filtergehäuse (2) an der filtergehäusefesten Abstützung (10) federnd abstützt und das Filterelement (3) mit seiner Axialdichtung (8) gegen die Dichtfläche (9) des Filtergehäuses (2) vorspannt, **dadurch gekennzeichnet,**
- **dass** die Federeinrichtung (11) zwei sich gegenüberliegende und im Wesentlichen tangential zur Endscheibe (6,7) verlaufende Federbügel (13) aufweist,
- **dass** die Federbügel (13) jeweils über einen ersten Steg (14) und einen zweiten Steg (15) mit der Endscheibe (6,7) verbunden sind.

2. Filtereinrichtung nach Anspruch 1,
**dadurch gekennzeichnet,**
**dass** die Federeinrichtung (11) einstückig mit der Endscheibe (6,7) ausgebildet ist.

3. Filtereinrichtung nach Anspruch 1 oder 2,
**dadurch gekennzeichnet,**
**dass** die Endscheibe (6,7) aus einem thermoplastischen Kunststoff und die Axialdichtung (8) aus einem elastischen Kunststoff, insbesondere aus Polyurethanschaum, ausgebildet sind.

4. Filtereinrichtung nach einem der Ansprüche 1 bis 3,
**dadurch gekennzeichnet,**
**dass** das Filterelement (3) quer zu dessen Zylinderachse (12) in das Filtergehäuse (2) einschiebbar ist und die beiden in Einschieberichtung (17) ersten Stege (14) einen geringeren Abstand (A) zueinander aufweisen als die zweiten Stege (15), so dass das Filterelement (3) mit den ersten Stegen (14) an der filtergehäusefesten Abstützung (10) vorbei geschoben werden kann und erst danach die Federbügel (13) auf der filtergehäuseseitigen Abstützung (10) aufliegen.

5. Filtereinrichtung nach einem der Ansprüche 1 bis 4,
**dadurch gekennzeichnet,**
**dass** an zumindest einem zweiten Steg (15) ein Anschlag (16) angeordnet ist.

6. Filterelement (3) für eine Filtereinrichtung (1) nach einem der Ansprüche 1 bis 5, wobei an einer Endscheibe (7) des Filterelements (3) eine Axialdichtung (8) angeordnet ist, die in Verbindung mit einer Dichtfläche (9) eines Filtergehäuses (2) die Abdichtung zwischen Rohseite (5) und Reinseite (4) bewirkt und wobei an zumindest einer Endscheibe (6,7) des Filterelements (3) eine Federeinrichtung (11) angeordnet ist, die sich beim Einsetzen des Filterelements (3) in das Filtergehäuse (2) an einer filtergehäusefesten Abstützung (10) federnd abstützt und das Filterelement (3) mit seiner Axialdichtung (8) gegen eine Dichtfläche (9) vorspannt.

7. Filterelement nach Anspruch 6,
**dadurch gekennzeichnet,**
- **dass** die Federeinrichtung (11) einstückig mit der Endscheibe (6,7) ausgebildet ist, und/oder
- **dass** die Endscheibe (6,7) aus einem thermoplastischen Kunststoff und die Axialdichtung (8) aus einem elastischen Kunststoff, insbesondere aus Polyurethanschaum, ausgebildet sind.

8. Filterelement nach Anspruch 6 oder 7,
**dadurch gekennzeichnet,**
**dass** die Federeinrichtung (11) zwei sich gegenüberliegende und im Wesentlichen tangential zur Endscheibe (6,7) verlaufende Federbügel (13) aufweist.

9. Filterelement nach Anspruch 8,
**dadurch gekennzeichnet,**
**dass** die Federbügel (13) jeweils über einen ersten Steg (14) und einen zweiten Steg (15) mit der Endscheibe (6,7) verbunden sind.

10. Filterelement nach Anspruch 9,
**dadurch gekennzeichnet,**
**dass** die beiden in Einschieberichtung (17) ersten Stege (14) einen geringeren Abstand (A) zueinander aufweisen als die zweiten Stege (15).

11. Filterelement nach Anspruch 9 oder 10,
**dadurch gekennzeichnet,**
**dass** an zumindest einem zweiten Steg (15) ein Anschlag (16) angeordnet ist.

## Claims

1. Filter device (1) in particular for filtering the air intake of a combustion engine,
- with a filter housing (2) with a filter element (3) exchangeably disposed therein, which separates a clean side (4) from a raw side (5) and which is substantially cylindrically formed,
- wherein at an end disc (7) of the filter element (3) an axial seal (8) is disposed, which in connection with a sealing surface (9) of the filter housing (2) achieves the sealing between raw side (5) and clean side (4),
- with a support (10) fixed to the filter housing, upon which support the filter element (3) is supported such that said filter element bears reliably with its axial seal (8) against the sealing surface (9) of the filter housing (2),
- wherein at least one end disc (6, 7) of the filter element (3) a spring device (11) is disposed, which supports itself elastically at the support (10) fixed to the filter housing when the filter element (3) is set into the filter housing (2) and biases the filter element (3) with its axial seal (8) against the sealing surface (9) of the filter housing (2), **characterised in that**
- the spring device (11) has two spring clips (13) which are disposed oppositely to one another and run substantially tangentially to the end disc (6, 7), and that
- the spring clips (13) are in each case connected with the end disc (6, 7) by means of a first bridge (14) and a second bridge (15).

2. Filter device according to claim 1,
**characterised in that**
the spring device (11) is integrally formed with the end disc (6, 7).

3. Filter device according to claims 1 or 2,
**characterised in that**
the end disc (6, 7) is formed from a thermoplastic synthetic material and the axial seal (8) is formed from an elastic synthetic material, in particular from polyurethane foam.

4. Filter device according to one of the claims 1 to 3,
**characterised in that**
the filter element (3) can be inserted transversely to the cylinder axis (12) of which into the filter housing (2) and the two first bridges (14) in the insertion direction (17) have a lesser distance (A) from one another than the second bridges (15), so that the filter element (3) with the first bridges (14) can be pushed past the support (10) fixed to the filter housing and only then do the spring clips (13) rest on the support (10) fixed to the filter housing.

5. Filter device according to one of claims 1 to 4,
**characterised in that**
a stop (16) is disposed on at least one second bridge (15).

6. Filter element (3) for a filter device (1) according to one of the claims 1 to 5, wherein at an end disc (7) of the filter element (3) an axial seal (8) is disposed, which in connection with a sealing surface (9) of a filter housing (2) achieves the sealing between raw side (5) and clean side (4) and wherein at least one end disc (6, 7) of the filter element (3) a spring device (11) is disposed, which supports itself elastically at a support (10) fixed to the filter housing when the filter element (3) is set into the filter housing (2) and biases the filter element (3) with its axial seal (8) against a sealing surface (9).

7. Filter element according to claim 6,
**characterised in that**
- the spring device (11) is formed integrally with the end disc (6, 7), and/or that
- the end disc (6, 7) is formed from a thermoplastic synthetic material and the axial seal (8) is formed from an elastic synthetic material, in particular from polyurethane foam.

8. Filter element according to claim 6 or 7,
**characterised in that**
the spring device (11) has two spring clips (13) which are disposed oppositely to one another and run substantially tangentially to the end disc (6, 7).

9. Filter element according to claim 8,
**characterised in that**
the spring clips (13) are in each case connected with the end disc (6, 7) by means of a first bridge (14) and a second bridge (15).

10. Filter element according to claim 9,
**characterised in that**
the two first bridges (14) in insertion direction (17) have a lesser distance (A) from one another than the second bridges (15).

11. Filter element according to claim 9 or 10,
**characterised in that**
a stop (16) is disposed on at least one second bridge (15).

## Revendications

1. Dispositif de filtre (1), en particulier pour la filtration de l'air d'admission d'un moteur à combustion interne,
- avec un boîtier de filtre (2) avec un élément de filtre (3) disposé dedans de manière interchangeable qui sépare un côté produit pur (4) d'un côté produit brut (5) et qui est conçu sensiblement en forme de cylindre,
- dans lequel, au niveau d'un disque d'extrémité (7) de l'élément de filtre (3), est disposé un joint d'étanchéité axial (8) qui provoque, en liaison avec une surface d'étanchéité (9) du boîtier de filtre (2), l'étanchéité entre le côté produit brut (5) et le côté produit pur (4),
- avec un appui (10) fixé au boîtier de filtre au niveau duquel l'élément de filtre (3) s'appuie de telle manière que celui-ci repose avec son joint d'étanchéité axial (8) de manière fiable contre la surface d'étanchéité (9) du boîtier de filtre (2),
- dans lequel, au niveau d'au moins un disque d'extrémité (6, 7) de l'élément de filtre (3), est disposé un dispositif de ressort (11) qui s'appuie de manière élastique, lors de l'insertion de l'élément de filtre (3) dans le boîtier de filtre (2), contre l'appui (10) fixé au boîtier de filtre et précontraint l'élément de filtre (3) avec son joint d'étanchéité axial (8) contre la surface d'étanchéité (9) du boîtier de filtre (2),
**caractérisé en ce**
- **que** le dispositif de ressort (11) présente deux étriers de ressort (13) opposés et s'étendant sensiblement tangentiellement au disque d'extrémité (6, 7),
- **que** les étriers de ressort (13) sont raccordés au disque d'extrémité (6, 7) respectivement par l'intermédiaire d'une première traverse (14) et d'une seconde traverse (15).

2. Dispositif de filtre selon la revendication 1,
**caractérisé en ce**
**que** le dispositif de ressort (11) est réalisé d'un seul tenant avec le disque d'extrémité (6, 7).

3. Dispositif de filtre selon la revendication 1 ou 2,
**caractérisé en ce**
**que** le disque d'extrémité (6, 7) est réalisé en une matière thermoplastique et le joint d'étanchéité axial (8), en une matière plastique élastique, en particulier en une mousse de polyuréthane.

4. Dispositif de filtre selon l'une quelconque des revendications 1 à 3,
**caractérisé en ce**
**que** l'élément de filtre (3) peut être inséré transversalement à son axe de cylindre (12) dans le boîtier de filtre (2) et les deux premières traverses (14) dans le sens d'enfoncement (17) présentent une distance (A) plus petite l'une par rapport à l'autre que les secondes traverses (15) de sorte que l'élément de filtre (3) puisse être poussé avec les premières traverses (14) devant l'appui (10) fixé au boîtier de filtre et ce n'est qu'après que les étriers de ressort (13) reposent sur l'appui (10) côté boîtier de filtre.

5. Dispositif de filtre selon l'une quelconque des revendications 1 à 4,
**caractérisé en ce**
**qu'**une butée (16) est disposée au niveau d'au moins une seconde traverse (15).

6. Elément de filtre (3) pour un dispositif de filtre (1) selon l'une quelconque des revendications 1 à 5, dans lequel, au niveau d'un disque d'extrémité (7) de l'élément de filtre (3), est disposé un joint d'étanchéité axial (8) qui provoque, en liaison avec une surface d'étanchéité (9) d'un boîtier de filtre (2), l'étanchéité entre le côté produit brut (5) et le côté produit pur (4) et dans lequel, au niveau d'au moins un disque d'extrémité (6, 7) de l'élément de filtre (3), est disposé un dispositif de ressort (11) qui s'appuie de manière élastique, lors de l'insertion de l'élément de filtre (3) dans le boîtier de filtre (2), contre un appui (10) fixé au boîtier de filtre et précontraint l'élément de filtre (3) avec son joint d'étanchéité axial (8) contre une surface d'étanchéité (9).

7. Elément de filtre selon la revendication 6,
**caractérisé en ce**
- **que** le dispositif de ressort (11) est réalisé d'un seul tenant avec le disque d'extrémité (6, 7), et/ou
- **que** le disque d'extrémité (6, 7) est réalisé en une matière thermoplastique et le joint d'étanchéité axial (8), en une matière plastique élastique, en particulier en une mousse de polyuréthane.

8. Elément de filtre selon la revendication 6 ou 7,
**caractérisé en ce**
**que** le dispositif de ressort (11) présente deux étriers de ressort (13) opposés et s'étendant sensiblement tangentiellement au disque d'extrémité (6, 7).

9. Elément de filtre selon la revendication 8,
**caractérisé en ce**
**que** les étriers de ressort (13) sont raccordés au disque d'extrémité (6, 7) respectivement par l'intermédiaire d'une première traverse (14) et d'une seconde traverse (15).

10. Elément de filtre selon la revendication 9,
**caractérisé en ce**
**que** les deux premières traverses (14) dans le sens d'enfoncement (17) présentent une distance (A) plus petite l'une par rapport à l'autre que les secondes traverses (15).

11. Elément de filtre selon la revendication 9 ou 10,
**caractérisé en ce**
**qu'**une butée (16) est disposée au niveau d'au moins une seconde traverse (15).
